Europäisches Patentamt

European Patent Office

Office européen des brevets

(11) Publication number: **0 324 613**
**A2**

## (12) EUROPEAN PATENT APPLICATION

(21) Application number: **89300251.9**

(51) Int. Cl.⁴: **F 16 F 13/00**

(22) Date of filing: **12.01.89**

(30) Priority: **13.01.88 GB 8800673**

(43) Date of publication of application:
**19.07.89 Bulletin 89/29**

(84) Designated Contracting States: **DE FR GB**

(71) Applicant: **AVON INDUSTRIAL POLYMERS LIMITED**
**Bath Road**
**Melksham Wiltshire SN12 8AA (GB)**

(72) Inventor: **West, John Philip**
**32 Mill Road Worton**
**Devizes Wiltshire (GB)**

(74) Representative: **Calderbank, Thomas Roger et al**
**MEWBURN ELLIS 2 Cursitor Street**
**London EC4A 1BQ (GB)**

(54) Hydraulically damped mounting device.

(57) A hydraulically damped mounting device has two anchor parts (1,3) joined by a resilient spring wall (9). The resilient spring wall (9) and a partition (6) define a working chamber (13) for liquid, the working chamber (13) being in communication with a compensation chamber (14) via a passage (73,74,75,76). The compensation chamber (14) is bound by a flexible bellows wall (5). A flexible diaphragm (66) of annular shape defines, together with the partition (6), a gas chamber. The annular nature of the diaphragm (66) means that the centre of the partition (6) which bears the most load during relative vibration of the anchor parts can be made strong.

Fig. 4.

## Description

### HYDRAULICALLY DAMPED MOUNTING DEVICE

The present invention relates to hydraulically damped mounting devices. Such devices may be used, for example, to damp vibration between two parts of a piece of machinery, e.g. a car engine and a chassis.

In EP-A-0115417 and corresponding US 4657232 we discussed mounting devices of the "cup and boss" type, in which a "boss", forming one anchor part to which one of the pieces of machinery was connected, was itself connected via a (normally) resilient wall to the mouth of a "cup", which was attached to the other piece of machinery and formed another anchor part. The cup and the resilient wall then defined a working chamber for hydraulic fluid, which was connected to a compensation chamber by a passage (usually elongate) which provided the damping orifice. The compensation chamber was separated from the working chamber by a rigid partition, and a flexible diaphragm was in direct contact with the liquid in the working chamber and separated that liquid from a gas pocket.

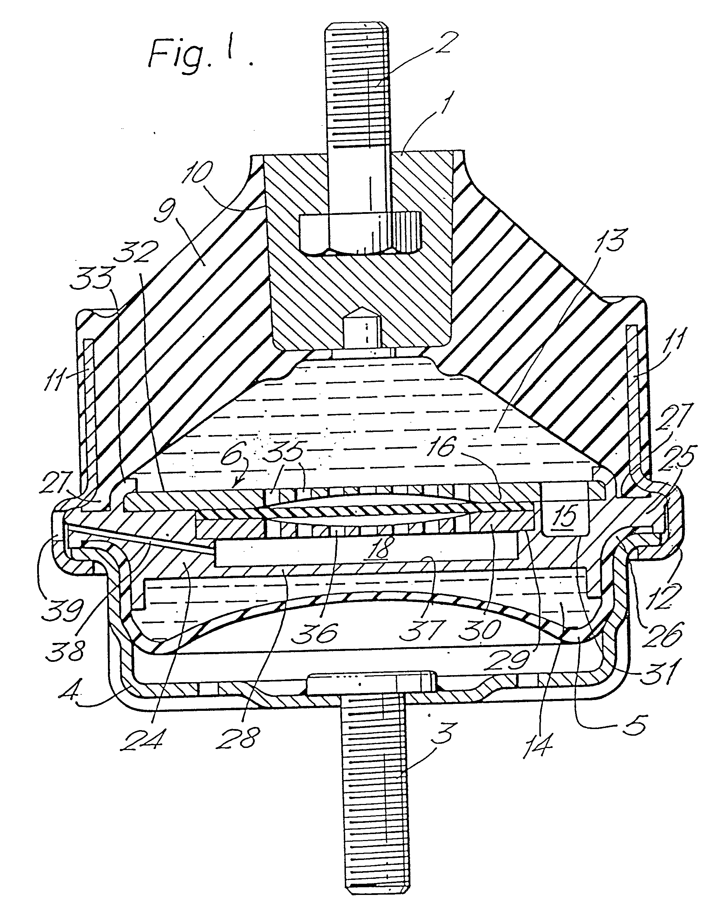

Fig. 1 of the accompanying drawings shows one of the hydraulically damped mounting devices disclosed in EP-A-0115417. It has a boss 1 connected via a fixing bolt to one part of the vibrating machinery. The other part of the vibrating machinery is connected to a bolt 3 fixed on a generally U-shaped cup 4. Inside the cup 4 is a deformable wall formed by a flexible bellows 5, and there is a rigid partition 6 adjacent the rim of the cup 4. A resilient spring 9 made of e.g. rubber, has a recess 10 which receives the boss 1, and the spring 9 extends to an annular bracket 11 which has a part 12 extending over the rim of the cup 4 thereby securing the resilient springs 9 to the cup 4.

Thus, a working chamber 13 is formed between the resilient spring 9 and the partition 6, and a compensation chamber of reservoir 14 is formed between the partition and the bellows wall 5. The working chamber 13 and the compensation chamber 14 are filled with hydraulic fluid, and the partition 6 has a passage 15 therein communicating at one end with the working chamber 13 and at the other end with the compensation chamber 14. The passage 15 is long and extends around the circumference of the partition 6.

A diaphragm 16 made of e.g. rubber-like material extends over a part of the surface of the partition 6, and traps a gas, such as air, in the space 18 between it and the partition 6.

The partition 6 comprises a plate 24 which provides a rigid barrier between the working chamber 13 and the compensation chamber 14, and has a flange 25 at its outer periphery which is received between portions 26 and 27 of bellows 5 and resilient spring 9 respectively. The flange 25 of the splayed portions 26 and 27 are held together with the part 12 of the annular bracket 11 which extends over the rim of the cup 4.

The upper surface of the plate 24 has a central recess 28 formed in it which has a step 29 in its radially outer edge, which step 29 acts as a shoulder for receiving a lower perforated plate 30. The perforated plate 30 has a depression at its central portion and the diaphragm 16 rests on the thicker portions at the radially outer edge of the plate to be supported clear of the central part of the perforated plate 30. Thus, the gas pocket is bounded by the recess 28 and the diaphragm 16. A recess in the form of a part-annular channel 31 is formed in the plate 24 radially outward of the central recess 26. It is this part-annular channel 31 which forms the passage 15 between the chamber 30 and the compensation chamber 14.

A perforated plate 32 is secured on top of the lower plate 24, by lips 33, over the diaphragm 16. Part of the upper plate 32 extends over the channel 31 to form the top of the pasage 15. An aperture 34 in the upper plate in the corresponding aperture (not shown) in the lower plate permit liquid to enter the pasage 15. The lower surface of the upper plate 32 has a depression therein, and the peripheral parts of the upper plate 32 abut against the diaphragm 16 to clamp the diaphragm 16 between the lower plate 30 and the upper plate 32.

When high frequency vibrations are transmitted by the bolt 2 to the boss 1, the boss 1 moves towards (or away from) the partition 6 and the resilient spring 9 flexes and reduces (increases) in the volume of the working chamber 13. The pressure of the hydraulic fluid in the working chamber 13 passes through holes 35 in the upper perforated plate 32 and forces the diaphragm 16 towards (or away from) the lower perforated plate 30. As the air between the diaphragam 16 and the lower perforated plate 30 is in communication with the air in the pocket 18 through holes 36, the movement of the diaphragm compresses (expands) the air in the pocket 18 and so there is little resistance to the oscillations. For larger amplitude oscillations, occurring at lower frequencies, the diaphragm 16 is pressed against the lower perforated plate 30 (or the upper perforated plate 32) and continued movement of the boss is possible only by movement of fluid from the chamber 13 to the reservoir (or vice versa) through the aperture 15. At low frequencies, the main damping effect is given by the movement of the liquid through the passage 15. The purpose of the lower perforated plate 30 is to limit the oscillations of the diaphragam 16 in the downward direction, but permit the diaphragm 16 to influence the air in the pocket 18.

The mounting may be subjected to significant fluctuations in ambient temperature, e.g. when used in a motor vehicle as an engine mounting. Such temperature variations will cause expansion or contraction of the air in the space 18 and would bias the diaphragm 16 either towards the perforated plate 32 or towards the lower perforated plate 30. This biasing of the diaphragm 16 would affect the performance of the mounting as it would limit the possible movement of the diaphragm in one of its directions of movement. To overcome this problem, a bleed orifice 13 is provided in the plate 24 extending from the recess 28 through the flange 25 and communicated with an opening 39 in the part of the bracket 11 which extends over the rim of the cup 4. This bleed orifice 38 is sufficiently narrow to prevent significant movement of air during vibrations of the diaphragm 16, but permits compensation for expansion or contraction of the air in pocket 18. It has been found, however, that such a mount may not operate satisfactorily when subject to large loads. Under large loads, the boss 1 may be forced against the partition 6, and the fact that the plate 32 is relatively thin over the diaphragm 16 (which is directly under the boss 1) may result in fracture of that plate 32. It is not possible to make the plate 32 thicker, as this then increases the length of the holes 35. The holes 35 then act as a constriction on the flow of the liquid therethrough, thereby reducing the air-spring effect of the pocket 18. A reduction in the number of the holes 35, to strengthen the plate 32, similarly results in a reduction int he air-spring efficiency.

Therefore, the present invention proposes that the diaphragm and preferably the corresponding gas pocket are annular. The central region of the partition, within the annulus of the diaphragm, then provides a support for the boss of the mount, when the mount is subject to large loads. It is possible for the passage between the working chamber and the compensaton chamber to be formed as a spiral within the annulus of the diaphragm. Such a spiral passage may be formed within the partition without making it sufficiently weak to cause problems when the load is applied to the partition above the spiral. This design also has the advantage that the area of the diaphragm may be large, thereby increasing the air-spring effect.

However, the fact that the spiral of the passage is within the annulus of the diaphragm may have the disadvantage of limiting the length of passage, and so limiting the damping effect. Therefore, it is preferable if the passage has an annular part which is adjacent the annular diaphragm. This annular part of the passage may be just within, or just outside the annular diaphragm (in plan view) but it is normally preferable for the annular part of the passage to be directly below the annular diaphragm. An outlet extends from that annular part of the passage to the compensation chamber, and the inlet may then be a duct which extends to the working chamber at a point within the annulus of the diaphragm.

The gas chamber bounded by the annular diaphragm may itself be annular. However, particularly when the passage has an annular part below the diaphragm, as mentioned above, it is preferable if the gas chamber comprises a space (which may be annular) within the annulus of the diaphragm connected to a further space directly adjacent the diaphragm.

As in EP-A-0115417, the part of the partition above the diaphragm may have holes therein, to allow fluid communication from the working chamber to the diaphragm. An apertured plate may also be provided below the diaphragm, in the gas pocket, to limit the movement of the diaphragm in that direction, although alternatively, projections may be provided in the gas pocket to achieve a similar purpose.

Embodiments of the invention will now be described in detail, by way of example, with reference to the accompanying drawings, in which:

Fig. 1 shows a hydraulically damped mounting device as discussed in EP-A-0115417 and has already been discussed;

Fig. 2 shows a first embodiment of a hydraulically damped mounting device according to the present invention;

Fig. 3 shows a plan view of the partition of the mount of Fig. 2; and

Fig. 4 shows a second embodiment of a hydraulically damped mounting device according to the present invention.

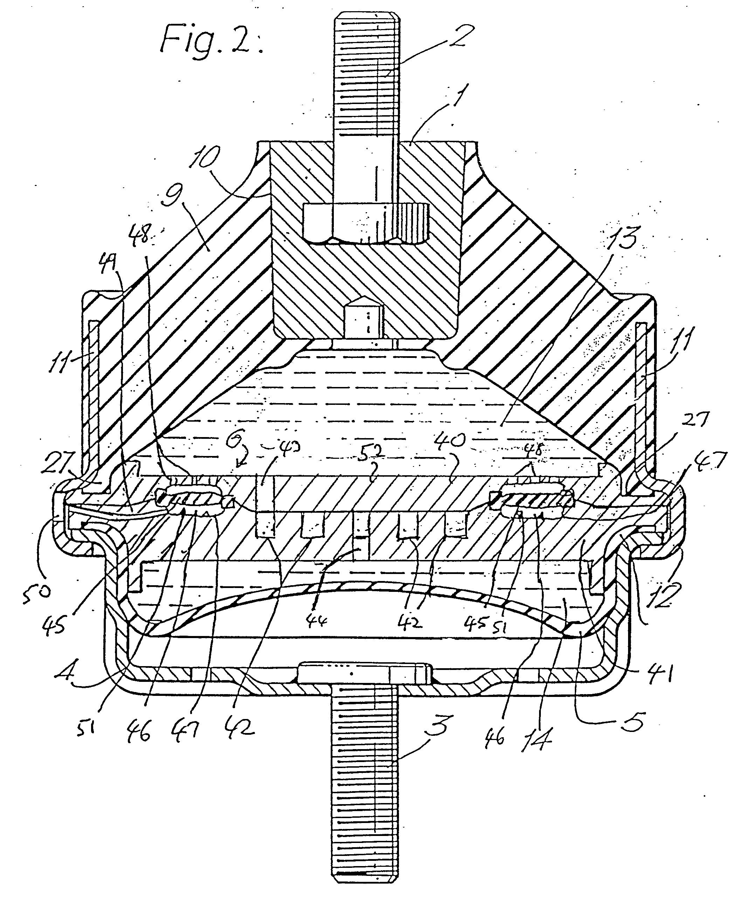

As can be seen from a comparison of Figs. 1 and 2, a hydraulically damped mounting device according to an embodiment of the present invention may be generally similar that that of mounting devices in EP-A-0115417, apart from the configuration of the partition 6 and the diaphragm mounted therein. Therefore, corresponding reference numerals are used to indicate similar parts. Furthermore, the structure of the mount may be modified in many ways, such as those discussed in EP-A-0115417.

In the embodiment of the present invention shown in Fig. 2, however, the partition 6 is formed from upper and lower plates 40,41, which are clamped in place between the bracket 11 and the cup 4 by the part 12 of the bracket 11 overlapping the cup 4. A spiral passage 42 is provided at a central region of the partition 6, and holes 43,44 allow this spiral to communicate with the working chamber 13 and the compensation chamber 14. Movement of the hydraulic fluid in the spiral passage 42 is damped due to friction effects, thereby damping the vibration of the mount.

The partition 6 also contains a flexible diaphragm 45 which is annular. The diaphragm 45 is clamped between the plates 40 and 41, and a gas chamber 46 is formed below the diaphragm 45 by a recess 47 in the lower plate 41. The upper plate 40 extends over the diaphragm 45 (although it is thinner in that region), and has holes 48 therein to permit fluid communication from the working chamber 13 to the diaphragm 45. High frequency vibrations of the boss 1 relative to the cup 4 are then absorbed as movement of the diaphragm 45, rather than by fluid movement through the spiral passage 42.

As in the mounts of EP-A-0115417, a bleed orifice 49 may be provided extending from the gas pocket 46 to an opening 50 in the bracket 11, to permit pressure equalisation of the gas within the chamber 46. As was mentioned above, this permits compensation for temperature changes in the mount. It is also desirable that means are provided within the gas chamber 46 to prevent the diaphragm 45 being forced against the surface of the recess 47. If the volume of the gas chamber 46 becomes too small, the gas-spring effect becomes affected by pressure changes within the gas pocket, which is undesirable. In order to prevent this, projections 51 may be provided in the gas chamber 46 projecting upwardly from the recess 47, which limit the movement of the diaphragm 45. Alternatively, however, a further plate may be provided within the gas chamber 46, in a manner generally similar to that used in EP-A-0115417, although of course, that plate will be annular corresponding to the annular diaphragm.

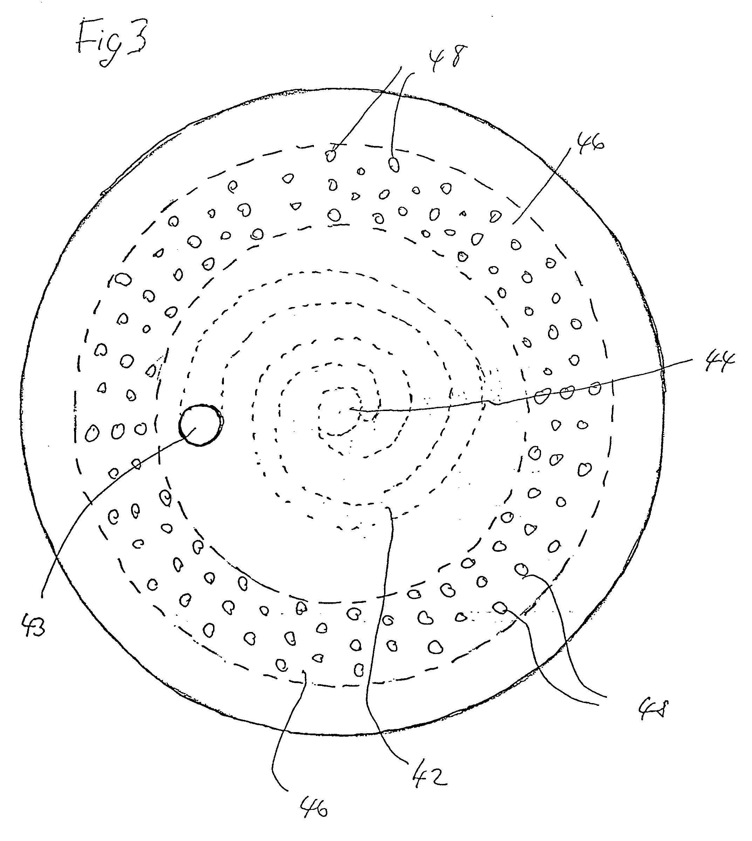

Fig. 3 of the accompanying drawings shows more clearly the annular nature of the diaphragm 46 and the spiral passage 42 forming the passage between the working chamber 13 and the compensation chamber 14.

As can be seen from Fig. 2, the region 52 of the plate 40 directly below the boss 1, may be made thick, and therefore strong, in this embodiment. Any reduction in strength of the upper plate caused by the thinning adjacent the diaphragm 45 is not significant to the mount because the plate 40 is also supported by the lower plate 41, which may also be thick. Therefore, when large loads are applied and the boss 1 comes in contact with the region 52 of the upper plate 40, the load is transmitted via plates 40 and 41 to the cup 4, thereby providing adequate support for the boss 1 without the risk of breakage.

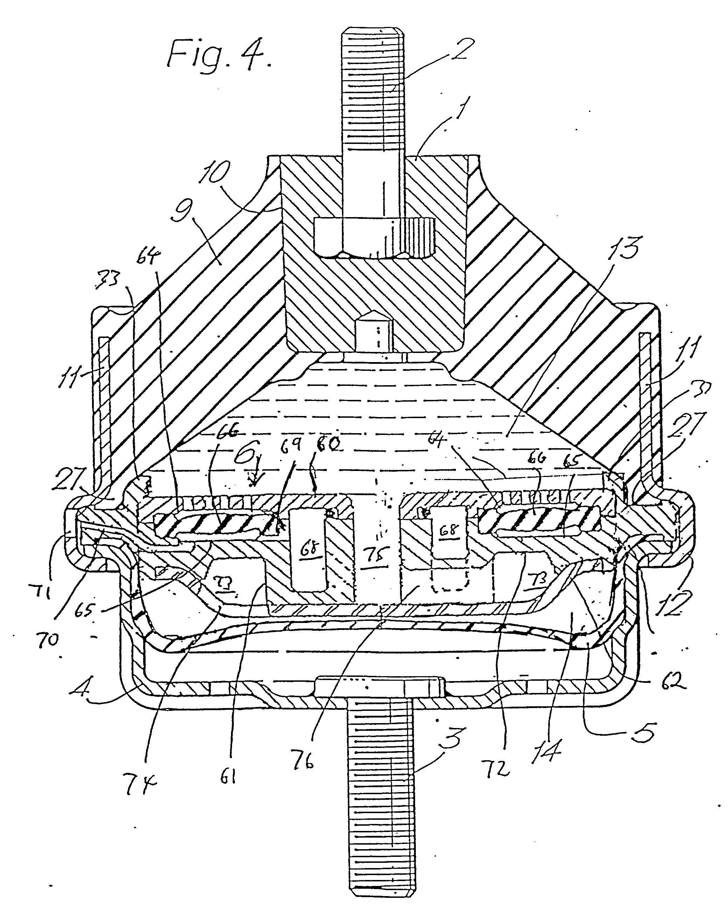

One disadvantage of the first embodiment described above with reference to Figs. 2 and 3 is that the length of the passage 42 is limited in order for it to fit within the annulus of the diaphragm 45. Fig. 4 shows a second embodiment of the present invention, presently preferred, in which this limitation is overcome. Apart from the structure of the partition the embodiment shown in Fig. 4 is generally similar to that shown in Figs. 2 and 3, and the same reference numerals will be used where appropriate, and the corresponding parts not described in detail again.

In Fig. 4, however, the partition 6 comprises an upper plate 60, a central plate 61, and a lower plate 62. These plates 60,61,62 are secured together e.g. by flanges 63 on the central plate 61 similar to flanges 33 in Fig. 1, and are clamped in place between the bracket 11 and the cup 4 by the part 12 of the bracket 11 overlapping the cup 4. The upper and central plates 60,61 have matching annular recesses 64,65 therein to define a space which contains a flexible annular diaphragm 66 which is able to vibrate within the space defined by the recesses 64,65. The surface of the upper plate 60 adjacent the recess 64 has holes 67 therein to permit fluid communication from the working chamber 13 to the diaphragm 66.

In this embodiment, the gas chamber is partially defined between the diaphragm and the wall of the recess 65 in the central plate 61, but there is also an annular space 68 within the annulus of the diaphragm 66 which communicates with the space below the diaphragm 66 through one or more openings 69. As in the first embodiment, high frequency vibrations of the boss 1 relative to the cup 4 are then absorbed by movement of the diaphragm 66.

As before, a bleed orifice 70 may be provided extending from the space below the partition 66 to an opening 71 in the bracket 11, for pressure equalisation. The walls of the recesses 64,65 limit vibration of the diaphragm 66. Note that this embodiment, even when the partition is forced against the recess 65, the volume of the gas chamber is not reduced significantly, due to the volume of the space 68, and hence pressure changes in the gas chamber are unlikely to affect the gas spring effect.

In the embodiment shown in Fig. 4, the passage has a different shape from that of Figs. 2 and 3. The central plate has an annular recess 72 in its lower surface, which is covered by the lower plate 62, to define an annular part 73 of the passage directly below the annular diaphragm 66. An opening 74 in the lower plate 62 permits fluid communication to and from the compensation chamber 14. There is also a duct 75 within the annulus of the diaphragm 66 which communicates with the annular part 73 of the passage via a transfer passage 76. The duct extends to the working chamber 13 so that the passage is defined by the duct 75, the transfer passage 76, the annular part 73 and the opening 74. This arrangement permits a larger, longer passage, but the advantage of high load capacity is retained.

Of course, many variations and modifications of the embodiment described above are possible. For example, as described in EP-A-0115417, the effective aperture of the bleed orifice 49 may be controlled in response to a frequency signal from the engine, thereby modifying the gas-spring characteristics in dependence on that frequency. The pressure of gas in the pocket 46, or the volume of that pocket, may also be variable. It is also possible to use a flexible wall joining the cup and boss, and a resilient wall bounding the compensation chamber.

## Claims

1. A hydraulically damped mounting device having two anchor parts (1,3) connected by a first deformable wall (9); a working chamber (13) enclosed between the first deformable wall (9) and a rigid partition (6) rigidly associated with a first one (1) of the anchor parts, the working chamber (13) containing liquid; a compensation chamber (14) being at least partially bounded by a second deformable wall (5); a passage (42;73,74,75,76) between the chambers (13,14) to allow fluid communication of the liquid between them; and a flexible diaphragm (45,66) on the partition (6) in direct contact with the liquid in the working chamber (13), the flexible diaphragm (45,66) acting as a barrier between the liquid and a gas chamber (46);
characterised in that:
the flexible diaphragm (45,66) is annular.

2. A hydraulically damped mounting device according to claim 1, wherein the first deformable wall (9) includes an elastomeric spring and the second deformable wall (5) includes a flexible bellows.

3. A hydraulically damped mounting device according to claim 1, wherein the first deformable wall includes a flexible bellows and the second deformable wall includes an elastomeric spring.

4. A hydraulically damped mounting device according to any one of claims 1 to 3 wherein the gas chamber has a bleed orifice (49;70) extending therefrom.

5. A hydraulically damped mounting device according to any one of the preceding claims wherein the gas chamber (46) is annular.

6. A hydraulically damped mounting device according to any one of claims 1 to 4, wherein the gas chamber comprises a first part immediately adjacent the diaphragm (66) and connected to a second annular part (68) within the annulus of the diaphragm (66).

7. A hydraulically damped mounting device according to any one of the preceding claims wherein the passage is a spiral (42) within the annulus of the diaphragm.

8. A hydraulically damped mounting device according to any one of claims 1 to 6 wherein the passage comprises an annular part (73) adjacent the annular diaphragm (66), and further part (75) extending to the working chamber (13) within the annulus of the diaphragm (66).

Fig. 1.

Fig. 2

Fig 3

Fig. 4.